(19) Europäisches Patentamt
European Patent Office
Office européen des brevets

(11) **EP 4 474 418 B1**

(12) **EUROPEAN PATENT SPECIFICATION**

(45) Date of publication and mention
of the grant of the patent:
**22.07.2026 Bulletin 2026/30**

(21) Application number: **22924722.6**

(22) Date of filing: **01.02.2022**

(51) International Patent Classification (IPC):
**C08K 5/10** *(2006.01)*  **C08L 1/12** *(2006.01)*
**C08L 33/06** *(2006.01)*  **C08J 5/00** *(2006.01)*

(52) Cooperative Patent Classification (CPC):
(C-Sets available)
**C08L 1/12; C08J 5/18;** C08J 2301/12;
C08J 2433/10; C08K 5/103; C08L 33/14  (Cont.)

(86) International application number:
**PCT/JP2022/003801**

(87) International publication number:
**WO 2023/148809 (10.08.2023 Gazette 2023/32)**

(54) **CELLULOSE ACETATE COMPOSITION**

CELLULOSEACETATZUSAMMENSETZUNG

COMPOSITION D'ACÉTATE DE CELLULOSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.12.2024 Bulletin 2024/50**

(73) Proprietor: **Daicel Corporation**
**Osaka-shi, Osaka 530-0011 (JP)**

(72) Inventors:
• **KUSUMOTO, Masaaki**
**Tokyo 108-8230 (JP)**
• **NAKANISHI, Hideki**
**Tokyo 108-8230 (JP)**
• **HIGUCHI, Akihiro**
**Tokyo 108-8230 (JP)**

(74) Representative: **Müller-Boré & Partner**
**Patentanwälte PartG mbB**
**Friedenheimer Brücke 21**
**80639 München (DE)**

(56) References cited:
WO-A1-2007/088736    WO-A1-2008/062610
WO-A1-2018/116497    WO-A1-2019/064626
WO-A1-2020/233948    JP-A- 2003 012 859
JP-A- 2009 210 777    JP-A- 2015 044 975
JP-A- 2015 168 708    JP-A- 2015 168 708
JP-A- 2015 168 709    JP-A- 2016 124 883
JP-A- 2018 100 351    JP-A- 2018 199 757
JP-A- 2019 151 799    JP-A- 2020 037 608
US-A- 4 181 766    US-A1- 2019 169 403

(52) Cooperative Patent Classification (CPC): (Cont.)

C-Sets
**C08L 1/12, C08L 33/10, C08K 5/11**

**Description**

Technical Field

The present disclosure relates to a cellulose acetate composition. More specifically, the present disclosure relates to a thermoplastic cellulose acetate composition.

Background Art

Cellulose acetate has poor thermoplasticity due to hydrogen bonding attributed to hydroxyl groups remaining in the molecular chain thereof. In particular, the molding temperature of cellulose acetate tends to increase as the degree of acetyl substitution of the cellulose acetate becomes lower. The problem is that when the molding temperature is high and is close to the thermal decomposition temperature of cellulose acetate, the cellulose acetate begins to thermally decompose during molding, and the quality of the resulting molded article is reduced. In addition, as the degree of acetyl substitution of the cellulose acetate increases, the crystallinity thereof also increases, and thus the thermoplasticity tends to decrease. Typically, workability and the quality of the molded article are improved by adding a plasticizer to a cellulose ester and reducing the molding temperature.

Patent Document 1 (JP 2018-100351 A) indicates that thermoplasticity (thermal fluidity) is improved by blending a plasticizer and a (meth)acrylic polymer having a weight average molecular weight greater than or equal to 1000 and less than or equal to 30000 into a cellulose acetate having a weight average polymerization degree greater than or equal to 120 and less than or equal to 330 and an acetyl group substitution degree greater than or equal to 2.10 and less than or equal to 2.60. For example, Patent Document 1 discloses, as specific compositions, an example containing 2.0 parts by mass of a (meth)acrylic polymer having a weight average molecular weight of 1700 and a comparative example containing 1.5 parts by mass of a (meth)acrylic polymer having a weight average molecular weight of 14000.

Patent Document 2 (JP 2015-168708 A) discloses a cellulose ester composition containing, per 100 parts by mass of a cellulose ester, from 2 to 100 parts by mass of a plasticizer and from 1 to 10 parts by mass of a polymer having a weight average molecular weight of from 5000 to 30000. Patent Document 2 also indicates that a methyl methacrylate polymer is preferred as the polymer. For example, Patent Document 2 discloses, as a specific composition, an example containing 1.5 parts by mass of a methyl methacrylate polymer having a weight average molecular weight of 14000.

Citation List

Patent Document

Patent Document 1: JP 2018-100351 A
Patent Document 2: JP 2015-168708 A

Summary of Invention

Technical Problem

As disclosed in Patent Documents 1 and 2, a composition containing a (meth)acrylic polymer or the like together with a plasticizer can be thermoformed at a temperature lower than the decomposition temperature of cellulose acetate. However, the problem with the technique proposed in Patent Document 1 is that a molded article having sufficient mechanical strength cannot be provided because only cellulose acetate having a low molecular weight can be used. In addition, in recent years, cellulose acetate has attracted attention as a material having biodegradability. However, when a large amount of a (meth)acrylic polymer or the like is blended in a composition, physical properties as an acrylic alloy become dominant, and thus the desired biodegradability may not be provided. Furthermore, although cellulose acetate can be produced from cellulose and acetic acid, which are bio-derived raw materials, (meth)acrylic polymers and the like can only be produced from so-called petroleum-derived raw materials. Moreover, from the viewpoint of sustainability, a demand exists for a composition in which the blending amount of the (meth)acrylic polymer or the like is small.

It was also confirmed that compositions containing a large amount of a (meth)acrylic polymer or the like, as widely disclosed in Patent Documents 1 and 2, have a foul odor. This foul odor is attributed to the (meth)acrylic polymer itself. Furthermore, according to the findings of the present inventors, when the blending amount of the (meth)acrylic polymer or the like is large as described above, even with a molded article produced at a low molding temperature, an offensive odor is generated during molding or during storage after molding. Thus, from the viewpoints of improving the quality of the resulting molded article and operational safety, a demand exists for a cellulose acetate composition that produces less odor during molding and in the molded article.

Hence, an object of the present disclosure is to provide a cellulose acetate composition that exhibits suppressed odor during both thermoforming and storage.

Solution to Problem

As a result of intensive studies, the present inventors discovered that when an extremely small addition amount of a (meth)acrylate-typed polymer is used in combination with a plasticizer, not only is sufficient thermoplasticity achieved, but the generation of odors during molding and the generation of odors during long-term storage of a molded article are also significantly suppressed.

That is, a cellulose acetate composition according to the present disclosure includes cellulose acetate, a plasticizer, and a polymer having a constituent unit derived from a (meth)acrylate. The weight average molecular weight of this polymer is greater than or equal to 500 and less than 5000. The content of the polymer in the cellulose acetate composition is less than 2 parts by mass per 100 parts by mass (parts by weight) of the cellulose acetate.

The polymer having a constituent unit derived from a (meth)acrylate may have at least one functional group at a terminal of the main chain or a side chain. This functional group is preferably selected from a hydroxyl group, a carboxyl group, and an alkoxysilyl group.

The polymer having a constituent unit derived from a (meth)acrylate preferably has a functional group equivalent of from 100 g/mol to 1000 g/mol.

The cellulose acetate preferably has a degree of acetyl substitution of from 1.9 to 2.6. The weight average molecular weight of the cellulose acetate is preferably from 70000 to 250000.

Preferably, the plasticizer is one or more selected from citrates, glycerin esters, adipates, and esterified products of compounds represented by the general formula $HO-(CH_2-CH_2-O)_n-H$ (where, n is an integer from 2 to 10). The content of the plasticizer in the cellulose acetate composition is preferably greater than or equal to 5 parts by mass and less than or equal to 50 parts by mass per 100 parts by mass of the cellulose acetate.

A molded article of the present disclosure is formed from the cellulose acetate composition described in any of the above aspects.

Advantageous Effects of Invention

According to the cellulose acetate composition of the present disclosure, odors during molding and during storage are suppressed. In addition, according to the composition of the present disclosure, a molded article having improved strength is provided.

Description of Embodiments

Hereinafter, an example of a preferred embodiment will be specifically described. Each of the configurations, combinations thereof, and the like in each of the embodiments are an example, and various additions, omissions, substitutions, and other changes may be made as appropriate without departing from the spirit of the present disclosure. The present disclosure is not limited by the embodiments and is limited only by the claims. Each aspect disclosed in the present specification can be combined with any other feature disclosed herein.

Note that in the present specification, the term "(meth)acryl" means "acryl and/or methacryl". Moreover, "from X to Y" indicating a range means "greater than or equal to X and less than or equal to Y". Unless otherwise noted, all test temperatures are room temperature (20°C $\pm$ 5°C).

Cellulose Acetate Composition

The cellulose acetate composition according to the present disclosure includes cellulose acetate, a plasticizer, and a polymer having a constituent unit derived from a (meth)acrylate. The weight average molecular weight of the polymer is greater than or equal to 500 and less than 5000. In the cellulose acetate composition according to an embodiment of the present disclosure, the content of the polymer is less than 2 parts by mass per 100 parts by mass of the cellulose acetate.

Here, the polymer having a constituent unit derived from a (meth)acrylate (hereinafter, the polymer is referred to as a "(meth)acrylate-typed polymer") means a polymer produced using a (meth)acrylate as a monomer. Note that in the present specification, the (meth)acrylate-typed polymer is a concept that also includes a copolymer produced by copolymerizing two or more types of monomers.

By including a plasticizer, the cellulose acetate composition according to an embodiment of the present disclosure can be easily molded in a temperature range that is lower than the decomposition temperature of the cellulose acetate. Furthermore, since the composition further contains the (meth)acrylate-typed polymer at the above-described amount, not only are odors during molding and storage reduced, but the mechanical properties of the resulting molded article are also improved. A molded article produced from the cellulose acetate composition exhibits excellent mechanical strength and high quality.

(Meth)Acrylate-Typed Polymer

As described above, the cellulose acetate composition according to an embodiment of the present disclosure includes a (meth)acrylate-typed polymer. Examples of the (meth)acrylate from which the constituent unit of the polymer is derived include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, 3-methoxybutyl (meth)acrylate, 2-hydroxyethyl (meth)acrylate, 2-hydroxypropyl (meth)acrylate, 2-hydroxybutyl (meth)acrylate, glycidyl (meth)acrylate, γ-(methacryloyloxypropyl) trimethoxysilane, and γ-(methacryloyloxypropyl) dimethoxymethylsilane. The (meth)acrylate-typed polymer may be a copolymer produced using two or more types of (meth)acrylates as monomers.

From the viewpoint of improving miscibility with the cellulose acetate, the (meth)acrylate-typed polymer is preferably a polymer of an aliphatic alkyl ester of (meth)acrylic acid, and is more preferably a polymer of an aliphatic alkyl ester having less than or equal to 8 carbons. Likewise, from the viewpoint of improving miscibility with the cellulose acetate, an acrylate-typed polymer is preferable, a polymer of an aliphatic alkyl ester of acrylic acid is more preferable, a polymer of an aliphatic alkyl ester having less than or equal to 8 carbons is even more preferable, and an acrylate-typed polymer selected from methyl acrylate, propyl acrylate, butyl acrylate, and 2-ethylhexyl acrylate is even more preferable.

As long as the effect of the present disclosure is achieved, the (meth)acrylate-typed polymer may be a copolymer of any of the above-described (meth)acrylates and another monomer. Examples of the other monomer include (meth)acrylic acid, (meth)acrylamide, (meth)acrylonitrile, vinyl acetate, vinyl propionate, vinyl alcohol, ethylene, propylene, and styrene. In the case of a copolymer of a (meth)acrylate and another monomer, from the viewpoint of odor reduction, the content proportion of the constituent unit derived from a (meth)acrylate in the copolymer is, in relation to all of the constituent units, preferably greater than or equal to 50 mol%, more preferably greater than or equal to 60 mol%, even more preferably greater than or equal to 70 mol%, yet even more preferably greater than or equal to 80 mol%, and particularly preferably greater than or equal to 90 mol%, and may be 100 mol%.

From the viewpoint of miscibility with the cellulose acetate, the (meth)acrylate-typed polymer preferably has at least one functional group at a terminal of the main chain or a side chain. A polymer having a functional group at a terminal of the main chain is more preferable, and a polymer having a functional group at a terminal of the main chain and at a terminal of a side chain is even more preferable.

Examples of the functional group present at a terminal of the main chain of the (meth)acrylate-typed polymer or at a terminal of a side chain thereof include a hydroxyl group, an alkoxy group, a carboxyl group, an epoxy group, an amino group, an amide group, and an alkoxysilyl group. Examples of the alkoxysilyl group include a trimethoxysilyl group, a triethoxysilyl group, a dimethoxyethoxysilyl group, and a diethoxymethoxysilyl group. A functional group selected from a hydroxyl group, a carboxyl group and an alkoxysilyl group is preferable, and a trimethoxysilyl group is preferable as the alkoxysilyl group. The (meth)acrylate-typed polymer may have two or more types of functional groups at terminals of the main chain or side chain.

The amount of the functional group on the main chain or side chain of the (meth)acrylate-typed polymer is not particularly limited. However, from the viewpoint of miscibility with cellulose acetate, the functional group equivalent of the polymer is preferably greater than or equal to 100 g/mol, and is more preferably greater than or equal to 200 g/mol, greater than or equal to 300 g/mol, greater than or equal to 400 g/mol, greater than or equal to 500 g/mol, and greater than or equal to 600 g/mol in this order. From the viewpoint of procurement ease, the functional group equivalent is preferably less than or equal to 1000 g/mol. Note that the functional group equivalent is the number of grams of a polymer containing 1 gram equivalent of the functional group, and can be measured by a known analysis method. For example, the hydroxyl group equivalent can be calculated by dividing the molecular weight of potassium hydroxide (KOH) by the hydroxyl value measured according to JIS K1557-1.

Weight Average Molecular Weight of (Meth)Acrylate-Typed Polymer

From the viewpoint of easy kneading with the cellulose acetate, the weight average molecular weight of the (meth)acrylate-typed polymer is less than 5000, preferably less than or equal to 4500, more preferably less than or equal to 4000, even more preferably less than or equal to 3500, and yet even more preferably less than or equal to 3000. From the viewpoint of reducing odors, and particularly ester odors, the weight average molecular weight of the (meth)acrylate-typed polymer is greater than or equal to 500, preferably greater than or equal to 750, more preferably greater than or equal to 1000, even more preferably greater than or equal to 1250, and yet even more preferably greater than or equal to 1500. The weight average molecular weight of the (meth)acrylate-typed polymer is measured by a method described below for the cellulose ester.

Viscosity of (Meth)Acrylate-Typed Polymer

From the viewpoint of ease of kneading with the cellulose acetate, the viscosity of the (meth)acrylate-typed polymer is preferably less than or equal to 30000 mPa·s, more preferably less than or equal to 25000 mPa·s, even more preferably less than or equal to 23000 mPa·s, and yet even more preferably less than or equal to 21000 mPa·s. In the present specification, the viscosity of the (meth)acrylate-typed polymer is a value measured using a B-type viscometer in an environment having a temperature of 25°C and a relative humidity of 50%.

Content of (Meth)Acrylate-Typed Polymer

In the cellulose acetate composition according to an embodiment of the present disclosure, the content of the (meth)acrylate-typed polymer per 100 parts by mass of the cellulose acetate is less than 2 parts by mass, and from the viewpoint of reducing odors, and particularly ester odors, the content thereof is preferably less than or equal to 1.8 parts by mass, more preferably less than or equal to 1.5 parts by mass, even more preferably less than or equal to 1.0 parts by mass, and yet even more preferably less than or equal to 0.625 parts by mass. On the other hand, from the viewpoint of reducing odor, and particularly, acetic acid odor associated with hydrolysis, the content of the (meth)acrylate-typed polymer per 100 parts by mass of the cellulose acetate is preferably greater than or equal to 0.01 parts by mass, more preferably greater than or equal to 0.05 parts by mass, and even more preferably greater than or equal to 0.1 parts by mass. The content of the (meth)acrylate-typed polymer per 100 parts by mass of the cellulose acetate may be greater than or equal to 0.01 parts by mass and less than 2.0 parts by mass, greater than or equal to 0.01 parts by mass and less than or equal to 1.5 parts by mass, greater than or equal to 0.01 parts by mass and less than or equal to 1.0 parts by mass, greater than or equal to 0.01 parts by mass and less than or equal to 0.625 parts by mass, greater than or equal to 0.05 parts by mass and less than 2.0 parts by mass, greater than or equal to 0.05 parts by mass and less than or equal to 1.5 parts by mass, greater than or equal to 0.05 parts by mass and less than or equal to 1.0 parts by mass, greater than or equal to 0.05 parts by mass and less than or equal to 0.625 parts by mass, greater than or equal to 0.1 parts by mass and less than 2.0 parts by mass, greater than or equal to 0.1 parts by mass and less than or equal to 1.5 parts by mass, greater than or equal to 0.1 parts by mass and less than or equal to 1.0 parts by mass, or greater than or equal to 0.1 parts by mass and less than or equal to 0.625 parts by mass. When two or more types of (meth)acrylate-typed polymers are blended, the total amount thereof is adjusted to the above-described range.

Cellulose Acetate (CA)

The cellulose acetate composition according to an embodiment of the present disclosure contains cellulose acetate. The composition according to an embodiment of the present disclosure may contain a cellulose ester other than cellulose acetate within a scope in which the effect of the present application can be achieved.

Degree of Acetyl Substitution

The degree of acetyl substitution of the cellulose acetate in the composition according to an embodiment of the present invention is not particularly limited, but from the viewpoint of ensuring high melt fluidity, the degree of acetyl substitution of the cellulose acetate is preferably greater than or equal to 1.9, more preferably greater than or equal to 2.0, and particularly preferably greater than or equal to 2.1. From the viewpoint of improving the miscibility with the (meth) acrylate-typed polymer, the degree of acetyl substitution of the cellulose acetate is preferably less than or equal to 2.6, more preferably less than or equal to 2.5, and even more preferably less than or equal to 2.4. Two or more cellulose acetates having different degrees of substitution may be used in combination.

The total degree of acetyl substitution (sometimes referred to as average degree of substitution) of the cellulose acetate is determined by converting a combined acetic acid content AV determined according to the method for measuring the combined acetic acid content in ASTM:D-871-96 (Testing methods for cellulose acetate, etc.). This is the most common procedure to determine the degree of substitution of cellulose acetate.

$$DS = 162.14 \times AV \times 0.01/(60.052 - 42.037 \times AV \times 0.01)$$

DS: Total degree of acetyl substitution
AV: Combined acetic acid content (%)

The method for measuring the combined acetic acid content (AV) is as follows.

First, 500 mg of a dried cellulose acetate (sample) is precisely weighed and dissolved in 50 mL of a mixed solvent of ultrapure water and acetone (volume ratio: 4:1), and then 50 mL of a 0.2 N aqueous sodium hydroxide solution is added to saponify the cellulose acetate at 25°C for 2 hours. Next, 50 mL of 0.2 N hydrochloric acid is added, and an amount of acetic acid released is titrated with a 0.2 N aqueous sodium hydroxide solution (0.2 N normal sodium hydroxide solution) using phenolphthalein as an indicator. Also, a blank test (test without using any sample) is performed by the same method. AV (combined acetic acid content) (%) is then calculated according to the following equation:

$$AV\ (\%) = (A\text{-}B) \times F \times 1.201/\text{sample weight (g)}$$

where,

A represents a titration volume (mL) of 0.2 N normal sodium hydroxide solution;
B represents a titration volume (mL) of 0.2 N normal sodium hydroxide solution in blank test; and
F represents a factor of 0.2 N normal sodium hydroxide solution.

Molecular Weight and Molecular Weight Distribution of Cellulose Acetate

In the composition according to an embodiment of the present disclosure, the weight average molecular weight of the cellulose acetate is not particularly limited, but from the viewpoint of producing a molded article having excellent strength, the weight average molecular weight thereof is preferably greater than or equal to 70000, may be greater than or equal to 83000, may be greater than or equal to 90000, may be greater than or equal to 100000, or may be greater than or equal to 150000. From the viewpoint of ensuring appropriate fluidity at the time of melting, the weight average molecular weight of the cellulose acetate is preferably less than or equal to 250000 and may be less than or equal to 200000. The weight average molecular weight of the cellulose acetate may be from 7000 to 250000, from 7000 to 200000, from 83000 to 250000, from 83000 to 200000, from 90000 to 250000, from 90000 to 200000, from 100000 to 250000, from 100000 to 200000, from 150000 to 250000, or from 150000 to 200000. When the weight average molecular weight of the cellulose acetate is less than 83000, the mechanical strength of the composition tends to be insufficient.

The molecular weight distribution of the cellulose acetate is evaluated by a ratio (Mw/Mn) of the weight average molecular weight Mw to the number average molecular weight Mn. From the viewpoint of ensuring high melt fluidity, the molecular weight distribution Mw/Mn of the cellulose acetate is preferably greater than 1.7, more preferably greater than or equal to 1.8, even more preferably greater than or equal to 2.0, and particularly preferably greater than or equal to 2.1. From the viewpoint of the production efficiency of the cellulose acetate, the molecular weight distribution Mw/Mn is preferably less than or equal to 3.5, more preferably less than or equal to 3.2, and even more preferably less than or equal to 3.0.

The cellulose acetate is a semi-synthetic polymer produced from cellulose as a raw material. A maximum value of the molecular weight of the cellulose acetate is determined by cellulose as a raw material. The cellulose acetate having a large molecular weight distribution Mw/Mn can be produced by performing hydrolysis in as short a time as possible in a production method which will be described later. In addition, a cellulose acetate having a large molecular weight distribution Mw/Mn can be produced using, as raw materials, celluloses having different molecular weights. Furthermore, the molecular weight distribution Mw/Mn can also be increased by mixing a plurality of cellulose acetate flakes different in median value of the degree of polymerization. The cellulose acetate having the molecular weight distribution Mw/Mn generally less than or equal to 3.5 can be produced by adjusting the reaction conditions in a method for producing cellulose acetate which will be described below. For ensuring a molecular weight distribution Mw/Mn greater than 3.5, a method of mixing a plurality of celluloses as raw materials, or a method of mixing a plurality of cellulose acetate flakes, is effective.

The weight average molecular weight and the molecular weight distribution of the cellulose acetate can be determined by known methods. Specifically, the weight average molecular weight of the cellulose ester is determined by performing size exclusion chromatography (GPC) measurement using the following apparatus under the following conditions (GPC-light scattering method).

Apparatus: "SYSTEM-21H", GPC available from Shodex
Solvent: acetone
Column: two GMHxl (Tosoh Corporation), guard column (TSK gel guard column HXL-H available from Tosoh Corporation)

Flow rate: 0.8 mL/min.
Temperature: 29°C
Sample concentration: 0.25% (wt/vol)
Injection volume: 100 μL
Detection: MALLS (multi-angle light scattering detector) ("DAWN-EOS" available from Wyatt Technology Corporation)
Reference material for MALLS calibration: PMMA (molecular weight: 27600)

Content of Cellulose Acetate

The content of cellulose acetate in the cellulose acetate composition according to an embodiment of the present disclosure is preferably greater than or equal to 30 wt.% and less than or equal to 95 wt.% in relation to the total composition. From the viewpoint of providing a high-strength molded article, the content of the cellulose acetate is more preferably greater than or equal to 40 wt.%. From the viewpoint of ensuring good extensibility, the content of the cellulose acetate is more preferably less than or equal to 90 wt.%. When two or more types of cellulose acetates having different physical properties are used in combination, the total content thereof is preferably adjusted to the above-described numerical range.

Method for Producing Cellulose Acetate

The cellulose acetate used in the composition according to an embodiment of the present disclosure can be produced by a known method for producing cellulose acetate. An example of such a production method includes what is called an acetic acid method in which acetic anhydride is used as an acetylating agent, acetic acid as a diluent, and sulfuric acid as a catalyst. The basic processes of the acetic acid method include: (1) pretreatment including grinding/disintegrating a pulp raw material (soluble pulp) having a relatively high $\alpha$-cellulose content and then spraying acetic acid and mixing them; (2) acetylation including reacting the pretreated pulp from (1) with a mixed acid containing acetic anhydride, acetic acid, and an acetylation catalyst (e.g., sulfuric acid); (3) aging including hydrolyzing cellulose acetate to form cellulose acetate having a desired combined acetic acid content; and (4) posttreatment including precipitating the cellulose acetate to separate it from the reaction solution after completion of the hydrolysis reaction, then purifying, stabilizing, and drying the cellulose acetate. The total degree of acetyl substitution can be adjusted by adjusting the conditions of aging (conditions, such as time and temperature).

Plasticizer

In the cellulose acetate composition according to an embodiment of the present disclosure, the type of the plasticizer is not particularly limited. From the viewpoint of improving the plasticity of the cellulose acetate, a plasticizer selected from the group consisting of citrates, glycerin esters, adipates, and esterified products of compounds represented by the general formula $HO-(CH_2-CH_2-O)_n-H$ (where, n is an integer from 2 to 10) is preferable. Two or more types of plasticizers may be used in combination. Another plasticizer can be included in the composition as long as the effects of the present disclosure are not impaired.
Specific examples of the citrate include acetyl triethyl citrate, acetyl tributyl citrate, isodecyl citrate, isopropyl citrate, triethyl citrate, triethylhexyl citrate, and tributyl citrate. Specific examples of the glycerin ester include triacetin, diacetin, and monoacetin.
Specific examples of the adipate include dimethyl adipate, dibutyl adipate, diisostearyl adipate, diisodecyl adipate, diisononyl adipate, diisobutyl adipate, diisopropyl adipate, diethylhexyl adipate dioctyl adipate, dioctyldodecyl adipate, dicapryl adipate, dihexyldecyl adipate, bis(2-methoxyethyl) adipate, bis[2-(2-methoxyethoxy)ethyl] adipate, and bis[2-(2-butoxyethoxy)ethyl] adipate. An adipate plasticizer commercially available under the trade name "DAIFATTY-101" (available from Daihachi Chemical Industry Co., Ltd.) may be used.
Specific examples of the esterified product of the compound represented by general formula $HO-(CH_2-CH_2-O)_n-H$ (where, n is an integer from 2 to 10) include diethylene glycol monoacetate, diethylene glycol diacetate, diethylene glycol dibenzoate, triethylene glycol monoacetate, triethylene glycol diacetate, triethylene glycol dipropionate, triethylene glycol dibenzoate, tetraethylene glycol monoacetate, tetraethylene glycol diacetate, tetraethylene glycol dipropionate, and tetraethylene glycol dibenzoate.
From the viewpoint of having a large effect of improving the plasticity of the cellulose acetate, the number average molecular weight of the plasticizer is preferably less than or equal to 1000, more preferably less than or equal to 800, even more preferably less than or equal to 600, and yet even more preferably less than or equal to 500. From the viewpoint of reducing bleeding from the resulting molded article, the number average molecular weight of the plasticizer is preferably greater than or equal to 50, more preferably greater than or equal to 100, and particularly preferably greater than or equal to 200. The number average molecular weight of the plasticizer is measured by the method described above for the cellulose acetate.

Plasticizer Content

The content of the plasticizer in the cellulose acetate composition according to an embodiment of the present disclosure is not particularly limited, but from the viewpoint of excelling in deformability, the content thereof is preferably less than or equal to 50 parts by mass, more preferably less than or equal to 45 parts by mass, even more preferably less than or equal to 40 parts by mass, and yet even more preferably less than or equal to 35 parts by mass, per 100 parts by mass of the cellulose acetate. From the viewpoint of improving melt fluidity, the content of the plasticizer is preferably greater than or equal to 5 parts by mass, more preferably greater than or equal to 10 parts by mass, even more preferably greater than or equal to 15 parts by mass, and particularly preferably greater than or equal to 20 parts by mass, per 100 parts by mass of the cellulose acetate. When two or more types of plasticizers are used in combination, a total amount thereof is adjusted to the above-described range.

Note that the content of the plasticizer in the molded article can be measured by the following method. First, a solvent that dissolves all of the cellulose acetate, the plasticizer, and the polymer having a constituent unit derived from a (meth)acrylate is selected. Next, the molded article to be measured is pulverized to a size suitable for dissolution, and then dissolved in the selected solvent to form a dilute solution. The content of the plasticizer and other components can be measured by analyzing the dilute solution using a method such as gas chromatography-mass spectrometry (GC-MASS). A nuclear magnetic resonance apparatus (NMR) or the like is used to identify the plasticizer.

Method for Producing Cellulose Acetate Composition

The cellulose acetate composition according to an embodiment of the present disclosure is produced by melt-kneading the cellulose acetate, the plasticizer, and the (meth)acrylate-typed polymer. This composition may also be produced by melt kneading the cellulose acetate and the plasticizer, and then adding the (meth)acrylate-typed polymer to the resulting molten mixture and melt kneading the entire mixture. Uniform mixing with the (meth)acrylate-typed polymer is facilitated by melt-kneading the cellulose acetate and the plasticizer in advance.

The cellulose acetate, the plasticizer, and the (meth)acrylate-typed polymer may be mixed before melt-kneading, and if necessary, the cellulose acetate and the plasticizer may be mixed before melt-kneading. A known mixer such as a Henschel mixer can be used for mixing before the melt-kneading. Dry mixing or wet mixing may be used. In using a mixer such as a Henschel mixer, the temperature in the mixer is preferably a temperature at which the cellulose acetate does not melt, for example, in a range higher than or equal to 20°C and lower than 200°C.

An extruder such as a twin-screw extruder can be used to melt-knead the cellulose acetate, the plasticizer, and the (meth)acrylate-typed polymer, melt-knead the cellulose acetate and the plasticizer, and melt-knead the kneaded product of the cellulose acetate and plasticizer with the (meth)acrylate-typed polymer. From the viewpoint of homogeneity of the kneaded product and suppression of deterioration due to heating, the kneading temperature (cylinder temperature) of the extruder is preferably from 170°C to 230°C. When melt-kneading is performed using a twin-screw extruder, the kneading temperature (also referred to as cylinder temperature) may be 200°C. The kneaded product may be extruded into a strand shape through a die attached to the tip of the twin-screw extruder and then cut into pellets. Here, the die temperature may be approximately 220°C.

The amount of the (meth)acrylate-typed polymer that is blended in the cellulose acetate composition according to an embodiment of the present disclosure is less than 2 parts by mass per 100 parts by mass of the cellulose acetate. From the viewpoint of reducing odors, and particularly ester odors, the amount of the (meth)acrylate-typed polymer is preferably less than or equal to 1.8 parts by mass, more preferably less than or equal to 1.5 parts by mass, even more preferably less than or equal to 1.0 parts by mass, and yet even more preferably less than or equal to 0.625 parts by mass. On the other hand, from the viewpoint of reducing odor, and particularly, acetic acid odor associated with hydrolysis, the content of the (meth)acrylate-typed polymer per 100 parts by mass of the cellulose acetate is preferably greater than or equal to 0.01 parts by mass, more preferably greater than or equal to 0.05 parts by mass, and even more preferably greater than or equal to 0.1 parts by mass. The blending amount of the (meth)acrylate-typed polymer per 100 parts by mass of the cellulose acetate may be greater than or equal to 0.01 parts by mass and less than 2.0 parts by mass, greater than or equal to 0.01 parts by mass and less than or equal to 1.5 parts by mass, greater than or equal to 0.01 parts by mass and less than or equal to 1.0 parts by mass, greater than or equal to 0.01 parts by mass and less than or equal to 0.625 parts by mass, greater than or equal to 0.05 parts by mass to less than 2.0 parts by mass, greater than or equal to 0.05 parts by mass and less than or equal to 1.5 parts by mass, greater than or equal to 0.05 parts by mass and less than or equal to 1.0 parts by mass, greater than or equal to 0.05 parts by mass and less than or equal to 0.625 parts by mass, greater than or equal to 0.1 parts by mass and less than or equal to less than 2.0 parts by mass, greater than or equal to 0.1 parts by mass and less than or equal to 1.5 parts by mass, greater than or equal to 0.1 parts by mass and less than or equal to 1.0 parts by mass, or greater than or equal to 0.1 parts by mass and less than or equal to 0.625 parts by mass. When two or more types of (meth)acrylate-typed polymers are blended, the total amount thereof is adjusted to less than 2 parts by mass.

A known additive such as a colorant, an ultraviolet absorber, a light stabilizer, an antioxidant, a heat stabilizer, an optical property adjuster, a fluorescent brightener, a flame retardant, a lubricant, a hydrolysis inhibitor, or a water repellent may be blended in the composition, as long as the effects of the present invention are not inhibited. In this case, the additive is preferably blended in such a manner that the total content of the cellulose acetate, the plasticizer, and the (meth) acrylate-typed polymer in the composition is greater than or equal to 90 wt.%.

Applications

The cellulose acetate composition according to an embodiment of the present disclosure can be melt molded at a relatively low temperature. The cellulose acetate composition according to an embodiment of the present disclosure has appropriate fluidity when melted, and thus can be suitably applied to the production of a film or a sheet through injection molding or molten film-formation. Furthermore, a thin film can be produced by stretching or inflation molding after melt-extrusion.

A molded article formed from the cellulose acetate composition according to an embodiment of the present disclosure can be suitably used, for example, in an application such as tableware, packaging containers, trays, agricultural materials, fishery materials, OA parts, building materials, medical parts, consumer electronic components, automobile members, daily goods, stationery, and eyeglass frames.

Examples

Hereinafter, the present invention will be specifically described with reference to examples, but the technical scope of the present invention is not limited by these examples. Hereinafter, unless otherwise specified, all tensile property evaluation tests were performed in a room (temperature: 25°C ± 5°C, humidity: 50% RH).

Test 1

Example 1

A Labo Plastomill (available from Toyo Seiki Seisaku-sho, Ltd.) was charged with 100 parts by mass of cellulose acetate (total degree of acetyl substitution = 2.45, weight average molecular weight = 170000), 25 parts by mass of an adipate plasticizer (trade name "DIAFATTY 101" available from Daihachi Chemical Industry Co., Ltd.) as a plasticizer, 0.625 parts by mass of a hydroxyl group-containing methyl acrylate polymer (trade name "Actflow UMM-1001" available from Soken Chemical & Engineering Co., Ltd.) as a (meth)acrylate-typed polymer, and 0.3 parts by mass of an antioxidant (trade name "Irgafos 168" available from BASF Japan Ltd.), the components were kneaded at 210°C for 5 minutes, resulting in the formation of a cellulose acetate composition of Example 1. Details of the (meth)acrylate-typed polymer are described in Table 1 below.

Examples 2 to 5

Cellulose acetate compositions of Examples 2 to 5 were produced in the same manner as in Example 1 with the exception that the (meth)acrylate-typed polymer was changed to that described in Table 1 below.

Comparative Example 1

A cellulose acetate composition of Comparative Example 1 was produced in the same manner as in Example 1 with the exception that a (meth)acrylate-typed polymer was not added.

[Table 1]

| | (Meth)acrylate-typed polymer | | | | |
| | Name | Basic skeleton | Functional group | Weight average molecular weight | Functional group equivalent [g/mol] |
|---|---|---|---|---|---|
| Comparative Example 1 | - | - | - | - | - |

(continued)

| | (Meth)acrylate-typed polymer | | | | |
| | Name | Basic skeleton | Functional group | Weight average molecular weight | Functional group equivalent [g/mol] |
|---|---|---|---|---|---|
| Example 1 | UMM-1001 | Methyl acrylate | Hydroxyl group | 1000 | 600 |
| Example 2 | CBB-3098 | Butyl acrylate | Carboxyl group | 3000 | 570 |
| Example 3 | CB-3098 | 2-ethylhexyl acrylate | Carboxyl group | 3000 | 570 |
| Example 4 | NE-1000 | Butyl acrylate | Trimethylsilyl group | 3000 | 620 |
| Example 5 | UT-1001 | 2-ethylhexyl acrylate | Hydroxyl group | 3500 | 970 |

The details of compounds listed in Table 1 are as follows.

UMM-1001 (trade name "ACTFLOW UMM-1001" available from Soken Chemical & Engineering Co., Ltd., hydroxyl group-containing methyl acrylate polymer, weight average molecular weight of 1000, functional group equivalent of 600 g/mol, viscosity from 8000 to 13500 mPa·s)

CBB-3098 (trade name "ACTFLOW CBB-3098" available from Soken Chemical & Engineering Co., Ltd., carboxyl group-containing butyl acrylate polymer, weight average molecular weight of 3000, functional group equivalent of 570 g/mol, viscosity from 12500 to 20500 mPa·s)

CB-3098 (trade name "ACTFLOW CB-3098" available from Soken Chemical & Engineering Co., Ltd., carboxyl group-containing 2-ethylhexyl acrylate polymer, weight average molecular weight of 3000, functional group equivalent of 570 g/mol, viscosity from 10000 to 20000 mPa·s)

NE-1000 (trade name "ACTFLOW NE-1000" available from Soken Chemical & Engineering Co., Ltd., trimethoxysilyl group-containing butyl acrylate polymer, weight average molecular weight of 3000, functional group equivalent of 620 g/mol, viscosity from 700 to 1300 mPa·s)

UT-1001 (trade name "ACTFLOW UT-1001" available from Soken Chemical & Engineering Co., Ltd., hydroxyl group-containing 2-ethylhexyl acrylate polymer, weight average molecular weight of 3500, functional group equivalent of 970 g/mol, viscosity of from 2000 to 5000 mPa·s)

Acetic Acid Generation Amount 1

The cellulose acetate composition of each of Examples 1 to 5 and Comparative Example 1 was frozen and pulverized, after which 100 mg of the resulting powder was collected as a sample. The sample was then subjected to gas chromatography-mass spectrometry (GC/MS analysis) under the following conditions, and the amount of acetate that was generated was quantified using a calibration curve. The measurement results are shown in Table 2 below.

GC/MS device: Agilent GC7890/5977B-MSD
Column: Rtx-624 [U] 60 m, $\varphi$0.32 mm, 1.8 $\mu$m
Heating temperature: 190°C
Heating time: 20 minutes
Headspace sampler: G1888 available from Agilent Technologies, Inc.
Vial volume: 20 mL

[Table 2]

| | CA | | | Plasticizer | | (Meth)acrylate-typed polymer | | Acetic acid generation amount |
|---|---|---|---|---|---|---|---|---|
| | Degree of substitution | Mw × 10³ | (parts by mass) | - | (parts by mass) | - | (parts by weight) | [mg] |
| Comparative Example 1 | 2.45 | 170 | 100 | DAIFATTY 101 | 25 | - | 0 | 0.09 |
| Example 1 | 2.45 | 170 | 100 | DAIFATTY 101 | 25 | UMM-1001 | 0.625 | 0.01 |
| Example 2 | 2.45 | 170 | 100 | DAIFATTY 101 | 25 | CBB-3098 | 0.625 | 0.02 |
| Example 3 | 2.45 | 170 | 100 | DAIFATTY 101 | 25 | CB-3098 | 0.625 | 0.03 |
| Example 4 | 2.45 | 170 | 100 | DAIFATTY 101 | 25 | NE-1000 | 0.625 | 0.02 |
| Example 5 | 2.45 | 170 | 100 | DAIFATTY 101 | 25 | UT-1001 | 0.625 | 0.02 |

As shown in Table 2, it was confirmed that the cellulose acetate compositions of the Examples, which each contained a (meth)acrylate-typed polymer, generated less acetic acid when heated than the composition of the Comparative Example.

Test 2

Example 6

100 parts by mass of cellulose acetate (total degree of acetyl substitution = 2.45, weight average molecular weight = 170000), 25 parts by mass of an adipate plasticizer (trade name "DIAFATTY-101" available from Daihachi Chemical Industry Co., Ltd.) as a plasticizer, 0.625 parts by mass of a hydroxyl group-containing methyl acrylate polymer (trade name "Actflow UMM-1001" available from Soken Chemical & Engineering Co., Ltd.) as a (meth)acrylate-typed polymer, and 0.3 parts by mass of an antioxidant (trade name "Irgafos 168" available from BASF Japan Ltd.) were fed into a twin-screw extruder (trade name "PCM30" available from Ikegai Co., Ltd., cylinder temperature: 200°C, die temperature: 230°C) and melt-kneaded, and then extruded in a strand shape and cut, resulting in the formation of pellets composed of the cellulose acetate composition of Example 6.

Example 7 and Comparative Examples 2 to 7

Pellets of Example 7 and Comparative Examples 2 to 7 were produced in the same manner as in Example 6 with the exception that the type of plasticizer and the amount of the (meth)acrylate-typed polymer were changed as described in Table 2 below.

Flowability Evaluation

The melt flow rate (MFR, in g/10 min) of the pellets of Examples 6 and 7 and Comparative Examples 2 to 7 was measured in accordance with ISO 1133 using a melt indexer (available from Toyo Seiki Seisaku-sho, Ltd.) under conditions of a temperature of 220°C and a load of 10 kg. An average value determined from five measurements is shown in Table 3 below for each example and comparative example.

Tensile Property Evaluation

The pellets of Examples 6 and 7 and Comparative Examples 2 to 7 were respectively injection molded (cylinder temperature: 230°C, mold temperature: 50°C) to prepare dumbbell-shaped test pieces. A tensile tester (trade name "Tensilon Universal Material Tester" available from A&D Company, Limited) was used to subject each test piece to a tensile test (tensile speed: 10 mm/min, distance between grips: 115 mm) in accordance with an ISO standard, and the tensile strength (in accordance with ISO 527-1, in MPa), the flexural strength (in accordance with ISO 178, in MPa), and the flexural modulus (in accordance with ISO 178, in MPa) were measured. An average value determined from three measurements is shown in Table 3 below for each example and comparative example.

Acetic Acid Generation Amount 2

The pellets (3.0 g) of Examples 6 and 7 and Comparative Examples 2 to 7 were each sealed in respective glass tubes (50 mL capacity) under an environment with a relative humidity of 75% and then allowed to stand at 60°C for 6 hours, after which the inside was aspirated using an acetate detector tube (available from Gastec Corporation), and the acetic acid generation amount (in ppm) was measured. The measurement results are shown in Table 3 below.

Sensory Test

The dumbbell-shaped test pieces used in the tensile property evaluation were crushed into approximately 1 cm square fragments using pliers. The crushed samples were inserted into respective 250 mL mayonnaise bottles and stored in a hot-air oven at 80°C for 72 hours. The mayonnaise bottles were removed from the hot-air oven and allowed to cool at room temperature, after which the odors were confirmed by three panelists. The results are shown in Table 3 below.

[Table 3]

| | CA | Plasticizer | | UMM-1001 | MFR | Tensile strength | Flexural strength | Flexural modulus | Acetic acid concentration | Sensory test |
|---|---|---|---|---|---|---|---|---|---|---|
| | (parts by mass) | - | (parts by mass) | (parts by mass) | [g/10 min] | [MPa] | [MPa] | [MPa] | (ppm) | |
| Comparative Example 2 | 100 | DAIFATTY 101 | 25 | 0 | 11 | 58 | 76 | 2950 | 2.00 | Acetic acid odor |
| Example 6 | 100 | DAIFATTY 101 | 25 | 0.625 | 14 | 64 | 85 | 3220 | 1.00 | Hardly sensed |
| Comparative Example 3 | 100 | DAIFATTY 101 | 25 | 3.125 | 22 | 58 | 74 | 2900 | 1.00 | Ester odor |
| Comparative Example 6 | 100 | DAIFATTY 101 | 25 | 2.000 | 21 | 60 | 80 | 2960 | 1.00 | Ester odor |
| Comparative Example 4 | 100 | Triacetin | 25 | 0 | 10 | 70 | 94 | 3450 | 3.00 | Acetic acid odor |
| Example 7 | 100 | Triacetin | 25 | 0.625 | 11 | 76 | 99 | 3680 | 1.50 | Hardly sensed |
| Comparative Example 5 | 100 | Triacetin | 25 | 3.125 | 13 | 75 | 96 | 3460 | 1.50 | Ester odor |
| Comparative Example 7 | 100 | Triacetin | 25 | 2.000 | 12 | 75 | 97 | 3480 | 1.50 | Ester odor |

EP 4 474 418 B1

The details of the compounds listed in Table 3 are as follows.

UMM-1001 (trade name "ACTFLOW UMM-1001" available from Soken Chemical & Engineering Co., Ltd., hydroxyl group-containing methyl acrylate polymer, weight average molecular weight of 1000, functional group equivalent of 600 g/mol, viscosity from 8000 to 13500 mPa·s)
DAIFATTY-101 (adipate plasticizer available from Daihachi Chemical Industry Co., Ltd.)

As shown in Table 3, it was confirmed that with the cellulose acetate compositions of the Examples containing the (meth)acrylate-typed polymer at an amount less than 2 parts by mass, the amount of acetic acid generated during storage was minimal, and the ester odor attributed to the (meth)acrylate-typed polymer was also suppressed. Furthermore, it was confirmed that with the compositions of the Examples, an appropriate MFR was provided, and mechanical properties were improved in comparison to the Comparative Examples.

From the evaluation results of Tests 1 and 2, it is clear that with the cellulose acetate compositions of the Examples, the generation of odors both during heating and molding and during storage is suppressed, and a molded article having excellent mechanical properties can be produced. From these evaluation results, the superiority of the present disclosure is clear.

Industrial Applicability

The cellulose acetate composition described above may be applied to various fields in which melt molding, injection molding, and molten film formation are used.

**Claims**

1. A cellulose acetate composition comprising: cellulose acetate;

    a plasticizer; and
    a polymer having a constituent unit derived from a (meth)acrylate,
    wherein
    a weight average molecular weight of the polymer having a constituent unit derived from a (meth)acrylate is greater than or equal to 500 and less than 5000, and
    a content of the polymer having a constituent unit derived from a (meth)acrylate is less than 2 parts by mass per 100 parts by mass of the cellulose acetate.

2. The cellulose acetate composition according to claim 1, wherein the polymer having a constituent unit derived from a (meth)acrylate includes at least one functional group at a terminal of a main chain or a side chain.

3. The cellulose acetate composition according to claim 2, wherein the functional group is selected from a hydroxyl group, a carboxyl group, and an alkoxysilyl group.

4. The cellulose acetate composition according to claim 2 or 3, wherein the polymer having a constituent unit derived from a (meth)acrylate has a functional group equivalent greater than or equal to 100 g/mol and less than or equal to 1000 g/mol.

5. The cellulose acetate composition according to any one of claims 1 to 4, wherein the cellulose acetate has a degree of acetyl substitution greater than or equal to 1.9 and less than or equal to 2.6.

6. The cellulose acetate composition according to any one of claims 1 to 5, wherein the cellulose acetate has a weight average molecular weight greater than or equal to 70000 and less than or equal to 250000.

7. The cellulose acetate composition according to any one of claims 1 to 6, wherein the plasticizer is one or more selected from citrates, glycerin esters, adipates, and esterified products of compounds represented by the general formula HO-(CH$_2$-CH$_2$-O)$_n$-H (where, n is an integer from 2 to 10).

8. The cellulose acetate composition according to any one of claims 1 to 7, wherein a content of the plasticizer is greater than or equal to 5 parts by mass and less than or equal to 50 parts by mass per 100 parts by mass of the cellulose acetate.

9. A molded article formed from the cellulose acetate composition described in any one of claims 1 to 8.

**Patentansprüche**

1. Celluloseacetat-Zusammensetzung, umfassend: Celluloseacetat;

   einen Weichmacher; und
   ein Polymer mit einer konstituierenden Einheit, abgeleitet von einem (Meth)acrylat, wobei
   ein gewichtsmittleres Molekulargewicht des Polymers mit einer konstituierenden Einheit, abgeleitet von einem (Meth)acrylat, größer als oder gleich 500 und weniger als 5000 beträgt, und
   ein Anteil des Polymers mit einer konstituierenden Einheit, abgeleitet von einem (Meth)acrylat, weniger als 2 Masseteile pro 100 Masseteilen des Celluloseacetats beträgt.

2. Celluloseacetat-Zusammensetzung nach Anspruch 1, wobei das Polymer mit einer konstituierenden Einheit, abgeleitet von einem (Meth)acrylat, mindestens eine funktionelle Gruppe an einem Ende einer Hauptkette oder einer Seitenkette enthält.

3. Celluloseacetat-Zusammensetzung nach Anspruch 2, wobei die funktionelle Gruppe aus einer Hydroxylgruppe, einer Carboxylgruppe und einer Alkoxysilylgruppe ausgewählt ist.

4. Celluloseacetat-Zusammensetzung nach Anspruch 2 oder 3, wobei das Polymer mit einer konstituierenden Einheit, abgeleitet von einem (Meth)acrylat, ein Äquivalent der funktionellen Gruppe von größer als oder gleich 100 g/mol und weniger als oder gleich 1000 g/mol aufweist.

5. Celluloseacetat-Zusammensetzung nach einem der Ansprüche 1 bis 4, wobei das Celluloseacetat einen Acetylierungsgrad von größer als oder gleich 1,9 und weniger als oder gleich 2,6 aufweist.

6. Celluloseacetat-Zusammensetzung nach einem der Ansprüche 1 bis 5, wobei das Celluloseacetat ein gewichtsmittleres Molekulargewicht von größer als oder gleich 70000 und weniger als oder gleich 250000 aufweist.

7. Celluloseacetat-Zusammensetzung nach einem der Ansprüche 1 bis 6, wobei der Weichmacher einer oder mehrere, ausgewählt aus Citraten, Glycerinestern, Adipaten und veresterten Produkten von Verbindungen, dargestellt durch die allgemeine Formel $HO-(CH_2-CH_2-O)_n-H$ (wobei n eine ganze Zahl von 2 bis 10 ist), ist.

8. Celluloseacetat-Zusammensetzung nach einem der Ansprüche 1 bis 7, wobei ein Anteil des Weichmachers größer als oder gleich 5 Masseteile und weniger als oder gleich 50 Masseteile pro 100 Masseteilen Celluloseacetat beträgt.

9. Formteil, gebildet aus der in einem der Ansprüche 1 bis 8 beschriebenen Celluloseacetat-Zusammensetzung.

**Revendications**

1. Composition d'acétate de cellulose comprenant :

   de l'acétate de cellulose ;
   un plastifiant ; et
   un polymère ayant une unité constitutive dérivée d'un (méth)acrylate, dans laquelle
   une masse moléculaire moyenne en poids du polymère ayant une unité constitutive dérivée d'un (méth)acrylate est supérieure ou égale à 500 et inférieure à 5000, et
   une teneur du polymère ayant une unité constitutive dérivée d'un (méth)acrylate est inférieure à 2 parties en masse pour 100 parties en masse de l'acétate de cellulose.

2. Composition d'acétate de cellulose selon la revendication 1, dans laquelle le polymère ayant une unité constitutive dérivée d'un (méth)acrylate comprend au moins un groupe fonctionnel à une extrémité d'une chaîne principale ou d'une chaîne latérale.

3. Composition d'acétate de cellulose selon la revendication 2, dans laquelle le groupe fonctionnel est choisi parmi un groupe hydroxyle, un groupe carboxyle et un groupe alkoxysilyle.

4.  Composition d'acétate de cellulose selon la revendication 2 ou 3, dans laquelle le polymère ayant une unité constitutive dérivée d'un (méth)acrylate présente un équivalent de groupe fonctionnel supérieur ou égal à 100 g/mol et inférieur ou égal à 1000 g/mol.

5.  Composition d'acétate de cellulose selon l'une quelconque des revendications 1 à 4, dans laquelle l'acétate de cellulose présente un degré de substitution acétyle supérieur ou égal à 1,9 et inférieur ou égal à 2,6.

6.  Composition d'acétate de cellulose selon l'une quelconque des revendications 1 à 5, dans laquelle l'acétate de cellulose présente une masse moléculaire moyenne en poids supérieure ou égale à 70000 et inférieure ou égale à 250000.

7.  Composition d'acétate de cellulose selon l'une quelconque des revendications 1 à 6, dans laquelle le plastifiant est un ou plusieurs choisis parmi les citrates, les esters de glycérine, les adipates et les produits estérifiés de composés représentés par la formule générale HO-(CH$_2$-CH$_2$-O)$_n$-H (où n est un entier de 2 à 10).

8.  Composition d'acétate de cellulose selon l'une quelconque des revendications 1 à 7, dans laquelle une teneur du plastifiant est supérieure ou égale à 5 parties en masse et inférieure ou égale à 50 parties en masse pour 100 parties en masse de l'acétate de cellulose.

9.  Article moulé formé à partir de la composition d'acétate de cellulose décrite dans l'une quelconque des revendications 1 à 8.

**REFERENCES CITED IN THE DESCRIPTION**

**Patent documents cited in the description**

- JP 2018100351 A
- JP 2015168708 A